# EUROPÄISCHE PATENTSCHRIFT

(11) **EP 1 281 887 B1**
(45) Veröffentlichungstag und Bekanntmachung des Hinweises auf die Patenterteilung: **26.04.2006**
(21) Anmeldenummer: 02015491.0
(22) Anmeldetag: 12.07.2002
(51) Int. Cl.: F16F 1/38

(54) **Rundlager**
Circular-section bearing
Palier à section circulaire

(30) Priorität: 01.08.2001 DE 10137302
(43) Veröffentlichungstag der Anmeldung: 05.02.2003
(73) Patentinhaber: BASF Aktiengesellschaft, 67056 Ludwigshafen (DE)
(72) Erfinder: Wulf, Andreas, 49406 Barnstorf (DE); Haupt, Stefan, 49082 Osnabrück (DE)

(56) Entgegenhaltungen:
- DE-A- 4 025 100
- DE-B- 1 047 036
- FR-A- 2 661 719
- GB-A- 589 538
- GB-A- 1 475 688
- US-A- 5 368 797
- US-A- 5 820 115
- US-A- 6 082 721
- PATENT ABSTRACTS OF JAPAN vol. 1997, no. 07, 31. Juli 1997 (1997-07-31) -& JP 09 079255 A (KUBOTA CORP), 25. März 1997 (1997-03-25)

## Beschreibung

Die Erfindung betrifft Rundlager nach Anspruch 1. Außerdem betrifft die Erfindung Automobile enthaltend die erfindungsgemäßen Rundlager.

Aus Polyurethanelastomeren hergestellte Rundlager werden in Automobilen innerhalb des Fahrwerks verwendet und sind allgemein bekannt. Sie werden insbesondere in Kraftfahrzeugen als schwingungsdämpfende Federelemente eingesetzt. Dabei übernehmen die Federelemente die Anbindung des Stossdämpfers an die Karosserie und/oder an Fahrwerkskomponenten. Durch eine solche elastische Ankopplung werden Schwingungen isoliert, die von der Fahrbahn hervorgerufen und über Rad und Stossdämpfer weitergeleitet werden und Schwingungen die vom Stossdämpfer hervorgerufen werden. Die Ankopplung wird so gestaltet, dass kardanische Bewegungen des Stossdämpfer ermöglicht werden und die Anforderungen an Kraft-Weg-Kennungen in axialer, radialer und kardanischer Richtung erfüllt werden. Radiale Kennungen beeinflussen in Abhängigkeit von der Fahrwerkskonzeption wesentlich das Fahrverhalten und müssen exakt abgestimmt werden. Das Zusammenspiel aus Stossdämpfer und Rundlager stellt die folgenden Funktionen sicher:
- Fahrkomfort
- Fahrsicherheit
- Wank-/Nickabstützung
- Reduktion von Effekten des Radstuckerns und Karosseriezitterns

Aufgrund der sehr unterschiedlichen Charakteristika und Eigenschaften einzelner Automobilmodelle müssen die Rundlager individuell an die verschiedenen Automobilmodelle angepasst werden, um eine ideale Fahrwerksabstimmung zu erreichen. Beispielsweise können bei der Entwicklung der Rundlager das Gewicht des Fahrzeugs, das Fahrwerk des speziellen Modells, die vorgesehenen Stoßdämpfer sowie die gewünschte Federcharakteristik berücksichtigt werden. Hinzu kommt, dass für verschiedene Automobile aufgrund des zur Verfügung stehenden Bauraums individuelle, auf die Baukonstruktion abgestimmte Einzellösungen erfunden werden müssen. Dokument US-A-6 082 727 zeigt die Merkmale des Oberbegriffs von Anspruch 1. Aus den vorstehend genannten Gründen können die bekannten Lösungen für die Ausgestaltung einzelner Rundlager nicht generell auf neue Automobilmodelle übertragen werden. Bei jeder neuen Entwicklung eines Automobilmodells muss ein neues Rundlager entwickelt werden, das den spezifischen Anforderungen des Modells gerecht wird.

Aufgabe der vorliegenden Erfindung war es somit, für ein spezielles, neues Automobilmodell eine geeignetes Rundlager mit den oben genannten Funktionen zu entwickeln, die den spezifischen Anforderungen gerade dieses Modells gerecht wird und einen möglichst guten Fahrkomfort und eine ausgezeichnete Fahrsicherheit gewährleistet.

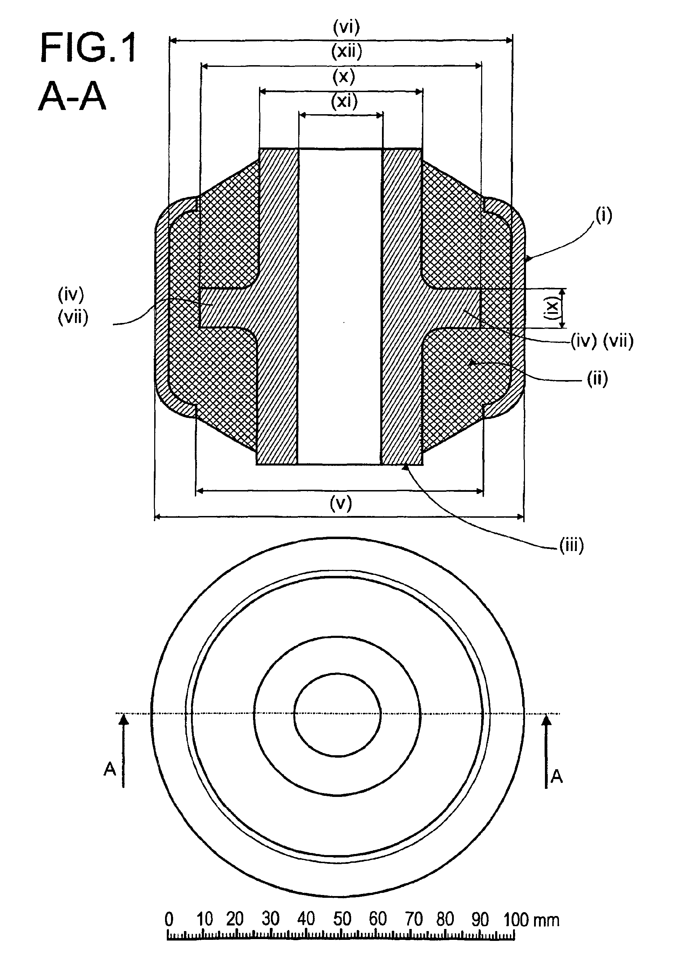

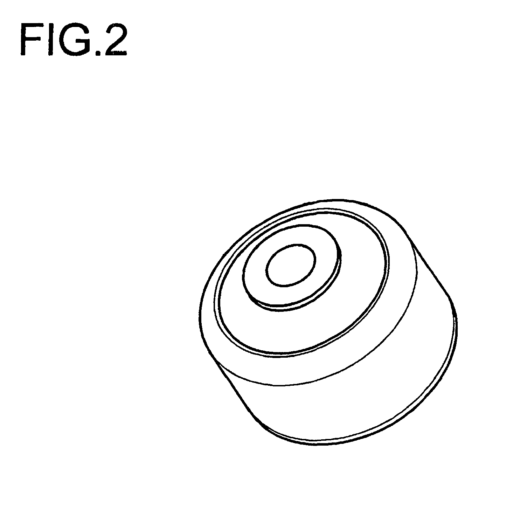

Diese Anforderungen werden durch die eingangs dargestellten Rundlager erfüllt. Ein erfindungsgemäßes Rundlager ist im Detail in den Figuren 1 und 2 dargestellt. In allen Figuren sind die angegebenen Maße in [mm] angegeben. Gerade diese dreidimensionale Form erwies sich als besonders geeignet, den spezifischen Anforderungen durch das spezielle Automobilmodell gerecht zu werden, insbesondere auch im Hinblick auf die spezifischen räumlichen Anforderungen und die geforderte Charakteristik.

Mit Hilfe von Rundlagern werden im Automobil Aggregate, Fahrwerksbauteile u.a. untereinander oder mit der Karosserie verbunden. Dabei erfüllen sie durch die Verwendung von Elastomerwerkstoffen die Funktion der elastischen Lagerung; andererseits sind sie auf Grund ihrer viskosen Eigenschaften in der Lage, Energie zu dissipieren und damit Schwingungen zu dämpfen. Dabei wird ein hohes Maß an Dämpfung besonders für die Bedämpfung großer Amplituden von niederfrequenten Schwingungen benötigt, die z.B. die Anbindung der Stossdämpfers an die Karosserie beeinflussen. Andererseits ist bei kleinen Amplituden und höheren Frequenzen eine hohe Dämpfung aus Gründen der Fahrzeugakustik unerwünscht. Das Dämpfungsverhalten derzeitiger, konventioneller Rundlager ist abhängig vom intrinsischen Dämpfungsvermögen des eingesetzten Elastomerwerkstoffes.

Bei sog. Hydrolagern wird das Dämpfungsvermögen mit Hilfe fluiddynamischer Effekte zum einen erheblich erhöht. Andererseits kann durch die Konstruktion des Lagers die Dämpfung auf bestimmte Amplituden abgestimmt werden.

Bei den vorliegenden erfindungsgemäßen Rundlagern besteht der besondere Nutzen in der gezielten Nutzung der Festkörperreibung zwischen dem Lagerwerkstoff und den umliegenden Begrenzungen, d.h. der Innen- und Außenbuchse. Diese Festkörperreibung wird durch bevorzugt die senkrecht zur Längsachse des Lagerelementes laufende Ausstülpung, auch Kragen genannt, erreicht. Aufgrund dieser geometrischen Anordnung senkrecht zur Längsachse wird der vorteilhafte Beitrag der Reibwirkung optimiert. Die Nutzung der Festkörperreibung kann bei Lagern auf Gummibasis nicht genutzt werden, weil Gummiwerkstoffe einem erheblichen abrasiven Verschleiß unterliegen. Elastomerwerkstoffe beispielsweise auf der Basis zelliger Polyurethan-Elastomere zeigen eine erheblich vergrößerte Resistenz gegenüber abrasivem Verschleiß, so daß die Nutzung dieses Dämpfungseffektes vielversprechend ist. Durch den Effekt der Festkörperreibung ist es ebenfalls möglich, dem System abhängig von der Amplitude der Erregung Dämpfung zu zuführen. Die Nutzung des Effektes der Dämpfung bei Festkörperreibung beruht hier auf der Relativbewegung zwischen der Innenbuchse und/oder der Außenbuchse und dem Elastomerwerkstoff des Lagerelementes während der Beanspruchung. Die dadurch entstehende Reibung führt dem System zusätzlich Dämpfung zu. Durch eine geänderte Konturgestaltung verändert sich die Dämpfung durch Reibeffekte. Eine feste Verbindung zwischen Lagerelement und dem umgebenden Werkstoff, d.h. der Innen- und Außenbuchse, ist nicht erfindungsgemäß, weil sie Relativbewegungen verhindert. Die Beweglichkeit der eingesetzten Teilen zueinander ist ausdrücklich Bestandteil dieser Erfindung.

Die Längsachse von (iii) ist die Achse parallel zum Hohlraum, beispielsweise der Bohrung, von (iii), in dem beispielsweise ein Befestigungsbolzen fixiert werden kann. Um den gesamten Umfang von (iii) umlaufend bedeutet, dass die Ausstülpung durchgängig und konzentrisch um die Längsachse angeordnet ist. Unter dem Ausdruck "nicht mit Haftvermittlern verbunden" ist zu verstehen, dass das Lagerelement (ii) weder mit der Innenbuchse (iii) noch mit der Außenbuchse (i) verklebt ist. Unter Haftvermittlern sind insbesondere allgemeine bekannte Klebstoffe zu verstehen. Bevorzugt wird das Lagerelement passgenau in der Außenbuchse und die Innenbuchse passgenau im Lagerelement positioniert, so dass die Teile derart zueinander fixiert sind, dass das Lagerelement sowohl an (i) als auch an (iii) reibt.

Das Lagerelement (ii) basiert auf zelligen Polyurethanelastomeren, beispielsweise Polyurethanen und/oder Polyharnstoffen, besonders bevorzugt auf der Basis von zelligen Polyurethanelastomeren bevorzugt mit einer Dichte nach DIN 53420 von 200 bis 1100, bevorzugt 300 bis 800 kg/m³, einer Zugfestigkeit nach DIN 53571 von ≥ 2, bevorzugt 2 bis 8 N/mm², einer Dehnung nach DIN 53571 von ≥ 300, bevorzugt 300 bis 700 % und einer Weiterreißfestigkeit nach DIN 53515 von ≥ 8, bevorzugt 8 bis 25 N/mm. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771. Bevorzugt weisen die zelligen Polyisocyanat-Polyadditionsprodukten einen Druckverformungsrest kleiner 25 % nach DIN 53572, wobei als Prüfkörper Würfel der Abmessung 40 mm x 40 mm x 30 mm ohne Silikonanstrich verwendet werden, die Prüfung bei konstanter Verformung erfolgt, wobei die Prüfkörper um 40 % zusammengedrückt und 22 Stunden bei 80°C im Umluftschrank gehalten werden, die Prüfeinrichtung nach der Entnahme aus dem Wärmeschrank 2 Stunden im zusammengedrückten Zustand auf Raumtemperatur abgekühlt wird, anschließend der Prüfkörper aus der Prüfeinrichtung entnommen wird und 10 min ± 30 s nach der Entnahme der Prüfkörper aus der Prüfeinrichtung die Höhe der Prüfkörper auf 0,1 mm genau gemessen wird.

Die in dem erfindungsgemäßen Rundlager enthaltenen Elemente (i), (ii) und (iii) weisen bevorzugt die nachfolgend dargestellten Maße auf. Die besonders bevorzugten Maße sind in der Figur 1 dargestellt.

Die Außenbuchse (i), die beispielsweise aus üblichen Metallen, z.B. Stahl, Eisen und/oder Aluminium bestehen kann, verfügt über einen Außendurchmesser (54) und einen Innendurchmesser (50), die in den Abmaßen und Ausführungen variieren können. Die Erfindung umfasst sowohl kalibrierte und unkalibrierte Buchsen. Die Außenbuchse (i) weist bevorzugt einen äußeren Durchmesser (v) von 52 mm bis 56 mm, besonders bevorzugt 54 mm, und einen inneren Durchmesser (vi) von 48 mm bis 52 mm, besonders bevorzugt 50 mm, auf. Die Höhe der Außenbuchse (i) beträgt bevorzugt 60 mm bis 75 mm.

Das Lagerelement (ii) weist bevorzugt einen äußeren Durchmesser (vi) von 48 mm bis 52 mm, besonders bevorzugt 50 mm, eine auf der inneren Oberfläche konzentrisch um die Längsachse von (ii) laufende Aussparung (vii) mit einer Tiefe (viii) von 5 mm bis 13 mm, besonders bevorzugt 8,5 mm, und einer Höhe (ix) von 4 mm bis 10 mm, besonders bevorzugt 6 mm, zur Aufnahme der Ausstülpung (iv) von (iii) sowie einen inneren Durchmesser (x) von 22 mm bis 26 mm, besonders bevorzugt 24 mm, auf. Der Werkstoff des Lagerelementes weist elastomere Eigenschaften auf und reibt zusätzlich bei der radialen Beanspruchung an den angrenzenden Oberflächen. Die Tiefe (viii) ergibt sich gemäß Figur 1 aus der halben Differenz von (xii) minus (x). Die Höhe der Lagerelemente (ii) beträgt bevorzugt 80 mm bis 90 mm.

Die Innenbuchse (iii), die beispielsweise aus üblichen Metallen, z.B. Stahl, Eisen und/oder Aluminium bestehen kann, verfügt über eine Innenbohrung üblicherweise zur Aufnahme eines Befestigungsbolzen. Der Außendurchmesser ergibt sich aus Festigkeitsgründen. Die Ausstülpung (iv), im Folgenden auch als Kragen bezeichnet, kann im Durchmesser, in der Dicke und in Ausführung und Anzahl variieren. Die Ausstülpung läuft um den gesamten Umfang von (iii). "Ausstülpung" bedeutet somit jede Erhebung auf der äußeren Oberfläche der Innenbuchse (iii) und lediglich in der bevorzugten Ausführungsform einen durchgängigen, senkrecht zur Längsachse der Innenbuchse (iii) verlaufenden Kragen. Der Kragen bildet bei radialer Belastung an den Flanken die beschriebene Reibfläche und an der Stirnseite die Wegbegrenzung bei der Einfederung. Diese Kontur bietet ebenfalls eine besonders vorteilhafte Charakteristik bei auftretenden kardanischen Belastungen. Die Innenbuchse (iii) weist bevorzugt einen inneren Durchmesser (xi) von 10 mm bis 20 mm, besonders bevorzugt 11 mm bis 15 mm, insbesondere 12,2 mm, einen äußeren Durchmesser (x) von 22 mm bis 26 mm, besonders bevorzugt 24 mm, einen Durchmesser (xii) in Höhe der Ausstülpung (iv) von 36 mm bis 48 mm, besonders bevorzugt 38 mm bis 45 mm, insbesondere 41 mm, sowie eine Höhe (ix) der Ausstülpung von 4 mm bis 10 mm, besonders bevorzugt 6 mm, auf. Die Ausstülpung bzw. Kragen (iv) ist bevorzugt in dem Lagerelement (ii) eingebettet, d.h. (iv) wird besonders bevorzugt vollständig von (ii) umfaßt. Die Höhe der Innenbuchse beträgt bevorzugt 91 mm bis 110 mm.

Gerade die räumliche Ausgestaltung der Rundlager, d.h. ihre dreidimensionale Form, hat neben ihrem Material einen entscheidenden Einfluss auf ihre Funktion. Über die Form der Rundlager werden die oben genannten Funktionen gezielt gesteuert. Diese dreidimensionale Form des Rundlagers muss somit individuell für jedes Automobilmodell entwickelt werden. Deshalb ist gerade die in der Figur 1 dargestellte Ausführungsform mit den oben dargestellten Massen besonders geeignet, bei einem bestimmten Automobil die besonderen Anforderungen zu erfüllen.

Die Herstellung der Polyisocyanat-Polyadditionsprodukte erfolgt üblicherweise durch Umsetzung von Isocyanaten mit gegenüber Isocyanaten reaktiven Verbindungen.

Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten.

Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 40 bis 95°C, bevorzugt 50 bis 90°C.

Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden.

Die Formteile sind nach 5 bis 60 Minuten ausgehärtet und damit entformbar.

Die Menge des in das Formwerkzeug eingebrachten Reaktionsgemisches wird üblicherweise so bemessen, dass die erhaltenen Formkörper die bereits dargestellte Dichte aufweisen.

Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

Die zelligen Polyisocyanat-Polyadditionsprodukte werden zweckmäßigerweise nach dem one shot-Verfahren mit Hilfe der Niederdruck-Technik oder insbesondere der Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

Bei Verwendung einer Mischkammer mit mehreren Zulaufdüsen können die Ausgangskomponenten einzeln zugeführt und in der Mischkammer intensiv vermischt werden. Als vorteilhaft hat es sich erwiesen, nach dem Zweikomponenten-Verfahren zu arbeiten.

Nach einer besonders vorteilhaften Ausführungsform wird in einem zwei-stufigen Prozess zunächst ein NCO-gruppenhaltiges Prepolymeres hergestellt. Dazu wird die Komponente (b) mit (a) im Überschuss üblicherweise bei Temperaturen von 80°C bis 160°C, vorzugsweise von 110°C bis 150°C, zur Reaktion gebracht. Die Reaktionszeit ist auf das Erreichen des theoretischen NCO-Gehaltes bemessen.

Bevorzugt erfolgt demnach die Herstellung der Formkörper in einem zweistufigen Verfahren, indem man in der ersten Stufe durch Umsetzung von (a) mit (b) ein Isocyanatgruppen aufweisendes Prepolymer herstellt und dieses Prepolymer in der zweiten Stufe in einer Form mit einer Vernetzerkomponente enthaltend gegebenenfalls die weiteren eingangs dargestellten Komponenten umsetzt.

Zur Verbesserung der Entformung der Schwingungsdämpfer hat es sich als vorteilhaft erwiesen, die Formwerkzeuginnenflächen zumindest zu Beginn einer Produktionsreihe mit üblichen äußeren Formtrennmitteln, beispielsweise auf Wachs- oder Silikonbasis oder insbesondere mit wässrigen Seifenlösungen, zu beschichten.

Die Formstandzeiten betragen in Abhängigkeit von der Größe und Geometrie des Formteils durchschnittlich 5 bis 60 Minuten.

Nach der Herstellung der Formteile in der Form können die Formteile bevorzugt für eine Dauer von 1 bis 48 Stunden bei Temperaturen von üblicherweise von 70 bis 120°C getempert werden.

Zu den dem Fachmann allgemein bekannten Ausgangskomponenten zur Herstellung der Polyisocyanat-Polyadditionsprodukte kann folgendes ausgeführt werden:

Als Isocyanate (a) können allgemein bekannte (cyclo)aliphatische und/oder aromatische Polyisocyanate eingesetzt werden. Zur Herstellung der erfindungsgemäßen Verbundelemente eignen sich besonders aromatische Diisocyanate, vorzugsweise 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyl-diisocyanat, 1,2-Diphenylethandiisocyanat, Phenylendiisocyanat und/oder aliphatische Isocyanate wie z.B. 1,12-Dodecan-, 2-Ethyl-1,4-butan-, 2-Methyl-1,5-pentan-, 1,4-Butandiisocyanat und vorzugsweise 1,6-Hexamethylendiisocyanat und/oder cycloaliphatische Diisocyanate z.B. Cyclohexan-1,3- und 1,4-diisocyanat, 2,4- und 2,6-Hexahydrotoluylen-diisocyanat, 4,4'-, 2,4'- und 2,2'-Dicyclohexylmethan-diisocyanat, vorzugsweise 1-Isocyanato-3,3,5-trimethyl-5-isocyanatomethylcyclohexan und/oder Polyisocyanate wie z.B. Polyphenylpolymethylenpolyisocyanate. Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden. Bevorzugt werden gegebenenfalls modifiziertes 2,2'-, 2,4'- und/oder 4,4'-Diphenylmethandiisocyanat (MDI), 1,5-Naphthylendiisocyanat (NDI), 3,3'-Dimethyl-diphenyl-diisocyanat, 2,4- und/oder 2,6-Toluylendiisocyanat (TDI) und/oder Mischungen dieser Isocyanate eingesetzt.

Als gegenüber Isocyanaten reaktive Verbindungen (b) können allgemein bekannte Polyhydroxylverbindungen eingesetzt werden, bevorzugt solche mit einer Funktionalität von 2 bis 3 und bevorzugt einem Molekulargewicht von 60 bis 6000, besonders bevorzugt 500 bis 6000, insbesondere 800 bis 5000. Bevorzugt werden als (b) Polyetherpolyole, Polyesterpolyalkohole und/oder hydroxylgruppenhaltige Polycarbonate eingesetzt.

Bevorzugt werden als (b) Polyesterpolyalkohole, im Folgenden auch als Polyesterpolyole bezeichnet, eingesetzt. Geeignete Polyesterpolyole können beispielsweise aus Dicarbonsäuren mit 2 bis 12 Kohlenstoffatomen und zweiwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische verwendet werden. Zur Herstellung der Polyesterpolyole kann es gegebenenfalls vorteilhaft sein, anstelle der Carbonsäure die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für zweiwertige Alkohole sind Glykole mit 2 bis 16 Kohlenstoffatomen, vorzugsweise 2 bis 6 Kohlenstoffatome, wie z.B. Ethylenglykol, Diethylenglykol, Butandiol-1,4, Pentandiol-1,5, Hexandiol-1,6, Decandiol-1,10, 2-Methylpropan-1,3-diol, 2,2-Dimethylpropandiol-1,3, Propandiol-1,3 und Dipropylenglykol. Je nach den gewünschten Eigenschaften können die zweiwertigen Alkohole allein oder gegebenenfalls in Mischungen untereinander verwendet werden.

Als Polyesterpolyole vorzugsweise verwendet werden Ethandiolpolyadipate, 1,4-Butandiol-polyadipate, Ethandiol-butandiol-polyadipate, 1,6-Hexandiol-neopentylglykol-polyadipate, 1,6-Hexandiol-1,4-Butandiol-polyadipate, 2-Methyl-1,3-propandiol-1,4-butandiol-polyadipate und/oder Polycaprolactone.

Geeignete estergruppenhaltige Polyoxyalkylenglykole, im wesentlichen Polyoxytetramethylenglykole, sind Polykondensate aus organischen, vorzugsweise aliphatischen Dicarbonsäuren, insbesondere Adipinsäure mit Polyoxymethylenglykolen des zahlenmittleren Molekulargewichtes von 162 bis 600 und gegebenenfalls aliphatischen Diolen, insbesondere Butandiol-1,4. Ebenfalls geeignete estergruppenhaltige Polyoxytetramethylenglykole sind solche aus der Polykondensation mit e-Caprolacton gebildete Polykondensate.

Geeignete carbonatgruppenhaltige Polyoxyalkylenglykole, im wesentlichen Polyoxytetramethylenglykole, sind Polykondensate aus diesen mit Alkyl- bzw. Arylcarbonaten oder Phosgen.

Beispielhafte Ausführungen zu der Komponente (b) sind in DE-A 195 48 771, Seite 6, Zeilen 26 bis 59 gegeben.

Zusätzlich zu den bereits beschriebenen gegenüber Isocyanaten reaktiven Komponenten können des weiteren niedermolekulare Kettenverlängerungs- und/oder Vernetzungsmitteln (b1) mit einem Molekulargewicht von kleiner 500, bevorzugt 60 bis 499 eingesetzt werden, beispielsweise ausgewählt aus der Gruppe der di- und/oder trifunktionellen Alkohole, di- bis tetrafunktionellen Polyoxyalkylen-polyole und der alkylsubstituierten aromatischen Diamine oder von Mischungen aus mindestens zwei der genannten Kettenverlängerungs- und/oder Vernetzungsmittel.

Als (b1) können beispielsweise Alkandiole mit 2 bis 12, bevorzugt 2, 4, oder 6 Kohlenstoffatomen verwendet werden, z.B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, Dialkylenglykole mit 4 bis 8 Kohlenstoffatomen, wie z.B. Diethylenglykol und Dipropylenglykol und/oder di- bis tetrafunktionelle Polyoxyalkylen-polyole.

Geeignet sind jedoch auch verzweigtkettige und/oder ungesättigte Alkandiole mit üblicherweise nicht mehr als 12 Kohlenstoffatomen, wie z.B. 1,2-Propandiol, 2-Methyl-, 2,2-Dimethyl-propandiol-1,3, 2-Butyl-2-ethylpropandiol-1,3, Buten-2-diol-1,4 und Butin-2-diol-1,4, Diester der Terephthalsäure mit Glykolen mit 2 bis 4 Kohlenstoffatomen, wie z.B. Terephthalsäure-bis-ethylenglykol- oder -butandiol-1,4, Hydroxyalkylenether des Hydrochinons oder Resorcins, wie z.B. 1,4-Di-(b-hydroxyethyl)-hydrochinon oder 1,3-Di(b-hydroxyethyl)-resorcin, Alkanolamine mit 2 bis 12 Kohlenstoffatomen, wie z.B. Ethanolamin, 2-Aminopropanol und 3-Amino-2,2-dimethylpropanol, N-Alkyldialkanolamine, wie z.B. N-Methyl- und N-Ethyl-diethanolamin.

Als höherfunktionelle Vernetzungsmittel (b1) seien.beispielsweise tri- und höherfunktionelle Alkohole, wie z.B. Glycerin, Trimethylolpropan, Pentaerythrit und Trihydroxycyclohexane sowie Trialkanolamine, wie z.B. Triethanolamin genannt.

Als Kettenverlängerungsmittel können verwendet werden: alkylsubstituierte aromatische Polyamine mit Molekulargewichten vorzugsweise von 122 bis 400, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, bevorzugt mindestens difunktionellen Verbindungen (b) unter den Verarbeitungsbedingungen zumindest teilweise, vorzugsweise jedoch vollständig mischbar sind.

Zur Herstellung der erfindungsgemäßen Formkörper können die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diamino-diphenylmethane sowie Gemische aus den genannten tetraalkylsubstituierten 4,4'-Diamino-diphenylmethanen und DETDA verwendet werden.

Zur Erzielung spezieller mechanischer Eigenschaften kann es auch zweckmäßig sein, die alkylsubstituierten aromatischen Polyamine im Gemisch mit den vorgenannten niedermolekularen mehrwertigen Alkoholen, vorzugsweise zwei- und/oder dreiwertigen Alkoholen oder Dialkylenglykolen zu verwenden.

Bevorzugt werden jedoch keine aromatischen Diamine eingesetzt. Bevorzugt erfolgt die Herstellung der erfindungsgemäßen Produkte somit in Abwesenheit von aromatischen Diaminen.

Die Herstellung der zelligen Polyisocyanat-Polyadditionsprodukte kann bevorzugt in Gegenwart von Wasser (c) durchgeführt werden. Das Wasser wirkt sowohl als Vernetzer unter Bildung von Harnstoffgruppen als auch aufgrund der Reaktion mit Isocyanatgruppen unter Bildung von Kohlendioxid als Treibmittel. Aufgrund dieser doppelten Funktion wird es in dieser Schrift getrennt von (e) und (b) aufgeführt. Per Definition enthalten die Komponenten (b) und (e) somit kein Wasser, das per Definition ausschließlich als (c) aufgeführt wird.

Die Wassermengen, die zweckmäßigerweise verwendet werden können, betragen 0,01 bis 5 Gew.-%, vorzugsweise 0,3 bis 3,0 Gew.-%, bezogen auf das Gewicht der Komponente (b). Das Wasser kann vollständig oder teilweise in Form der wässrigen Lösungen der sulfonierten Fettsäuren eingesetzt werden.

Zur Beschleunigung der Reaktion können dem Reaktionsansatz sowohl bei der Herstellung eines Prepolymeren als auch gegebenenfalls bei der Umsetzung eines Prepolymeren mit einer Vernetzerkomponente allgemein bekannte Katalysatoren (d) zugefügt werden. Die Katalysatoren (d) können einzeln wie auch in Abmischung miteinander zugegeben werden. Vorzugsweise sind dies metallorganische Verbindungen, wie Zinn-(II)-Salze von organischen Carbonsäuren, z.B. Zinn-(II)-dioctoat, Zinn-(II)-dilaurat, Dibutylzinndiacetat und Dibutylzinndilaurat und tertiäre Amine wie Tetramethylethylendiamin, N-Methylmorpholin, Diethylbenzylamin, Triethylamin, Dimethylcyclohexylamin, Diazabicyclooctan, N,N'-Dimethylpiperazin, N-Methyl,N'-(4-N-Dimethylamino-)butyl-piperazin, N,N,N',N",N"-Pentamethyldiethylendiamin oder ähnliche.

Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-Gruppen.

Je nach einzustellender Reaktivität gelangen die Katalysatoren (d) in Mengen von 0,001 bis 0,5 Gew.-%, bezogen auf das Prepolymere, zur Anwendung.

Gegebenenfalls können in der Polyurethanherstellung übliche Treibmittel (e) verwendet werden. Geeignet sind beispielsweise niedrig siedende Flüssigkeiten, die unter dem Einfluss der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe, wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung derartiger zellhaltiger elastischer Formkörper aus Harnstoffgruppen gebunden enthaltenden Elastomeren hängt ab von der Dichte, die man erreichen will, sowie von der Menge des bevorzugt mit verwendeten Wassers. Im allgemeinen liefern Mengen von 1 bis 15 Gew.-%, vorzugsweise 2 bis 11 Gew.-%, bezogen auf das Gewicht der Komponente (b), zufriedenstellende Ergebnisse. Besonders bevorzugt wird ausschließlich Wasser (c) als Treibmittel eingesetzt.

Bei der Herstellung des Formteile können Hilfs- und Zusatzstoffe (f) eingesetzt werden. Dazu zählen beispielsweise allgemein bekannte oberflächenaktive Substanzen, Hydrolyseschutzmittel, Füllstoffe, Antioxidantien, Zellregler, Flammschutzmittel sowie Farbstoffe. Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise zu den Emulgatoren zusätzliche Verbindungen mit emulgierender Wirkung, wie die Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure. Des weiteren kommen Schaumstabilisatoren in Frage, wie z.B. oxethylierte Alkylphenole, oxethylierte Fettalkohole, Paraffinöle, Ricinusöl- bzw. Ricinolsäureester, Türkischrotöl und Erdnussöl und Zellregler, wie Paraffine und Fettalkohole. Außerdem können als (f) Polysiloxane und/oder Fettsäuresulfonate eingesetzt werden. Als Polysiloxane können allgemein bekannte Verbindungen verwendet werden, beispielsweise Polymethylsiloxane, Polydimethylsiloxane und/oder Polyoxyalkylen-Silikon-Copolymere. Bevorzugt weisen die Polysiloxane eine Viskosität bei 25°C von 20 bis 2000 mPas auf.

Als Fettsäuresulfonate können allgemein bekannte sulfonierte Fettsäuren, die auch kommerziell erhältlich sind, eingesetzt werden. Bevorzugt wird als Fettsäuresulfonat sulfoniertes Rizinusöl eingesetzt.

Die oberflächenaktiven Substanzen werden üblicherweise in Mengen von 0,01 bis 5 Gew.-Teilen, bezogen auf 100 Gew.-Teile der Komponente (b) angewandt.

## Patentansprüche

1. Rundlager enthaltend (i) Außenbuchse, (ii) Lagerelement, das von der Außenbuchse umfasst wird, und eine hohle Innenbuchse (iii), die in dem Lagerelement (ii) positioniert ist, wobei die Innenbuchse (iii) auf ihrer zum (ii) Lagerelement gerichteten Oberfläche senkrecht zur Längsachse mindestens eine um ihren gesamten Umfang umlaufende Ausstülpung (iv) aufweist, **dadurch gekennzeichnet, dass** Außenbuchse (i), Lagerelement (ii) und hohle Innenbuchse (iii) nicht mit Haftvermittlern verbunden und zueinander beweglich sind und das Lagerelement (ii) auf zelligen Polyisocyanat-Polyadditionsprodukten basiert.

2. Rundlager gemäß Anspruch 1, **dadurch gekennzeichnet, dass** die Außenbuchse (i) einen äußeren Durchmesser (v) von 52 mm bis 56 mm und einen inneren Durchmesser (vi) von 48 mm bis 52 mm aufweist.

3. Rundlager gemäß Anspruch 1, **dadurch gekennzeichnet, dass** das Lagerelement (ii) einen äußeren Durchmesser (vi) von 48 mm bis 52 mm, eine auf der inneren Oberfläche konzentrisch um seine Längsachse laufende Aussparung (vii) mit einer Tiefe (viii) von 5 mm bis 13 mm und einer Höhe (ix) von 4 mm bis 10 mm zur Aufnahme der Ausstülpung (iv) von der hohlen Innenbuchse (iii) sowie einen inneren Durchmesser (x) von 22 mm bis 26 mm aufweist.

4. Rundlager gemäß Anspruch 1, **dadurch gekennzeichnet, dass** die hohle Innenbuchse (iii) einen inneren Durchmesser (xi) von 10 mm bis 20 mm, einen äußeren Durchmesser (x) von 22 mm bis 26 mm, einen Durchmesser (xii) in Höhe der Ausstülpung (iv) von 36 mm bis 48 mm sowie eine Höhe (ix) der Ausstülpung von 4 mm bis 10 mm aufweist.

5. Automobile enthaltend Rundlager gemäß einem der Ansprüche 1 bis 4.

## Claims

1. A round bearing comprising (i) outer sleeve, (ii) bearing element, which is encompassed by the outer sleeve, and a hollow inner sleeve (iii) positioned in the bearing element (ii), where the inner sleeve (iii) has, on its surface oriented toward (ii) the bearing element, perpendicularly to the longitudinal axis at least one protrusion (iv) running around its entire periphery, wherein outer sleeve (i), bearing element (ii) and hollow inner sleeve (iii) have not been bonded with adhesion promoters and can be moved with respect to one another and the bearing element (ii) is based on cellular polyisocyanate polyaddition products.

2. The round bearing according to claim 1, wherein the outer sleeve (i) has an external diameter (v) of from 52 mm to 56 mm and an internal diameter (vi) of from 48 mm to 52 mm.

3. The round bearing according to claim 1, wherein the bearing element (ii) has an external diameter (vi) of from 48 mm to 52 mm, and has, on the inner surface, a recess (vii) running concentrically around its longitudinal axis having a depth (viii) of from 5 mm to 13 mm and having a height (ix) of from 4 mm to 10 mm, to receive the protrusion (iv) of the hollow inner sleeve (iii), and also has an internal diameter (x) of from 22 mm to 26 mm.

4. The round bearing according to claim 1, wherein the hollow inner sleeve (iii) has an internal diameter (xi) of from 10 mm to 20 mm, an external diameter (x) of from 22 mm to 26 mm, a diameter (xii) at an axial position defined by the protrusion (iv) of from 36 mm to 48 mm, and also a height (ix) of the protrusion of from 4 mm to 10 mm.

5. An automobile comprising a round bearing according to any of claims 1 to 4.

## Revendications

1. Palier à section circulaire comprenant une douille externe (i), un élément de palier (ii) qui est entouré par la douille externe, et une douille interne creuse (iii), qui est positionnée dans l'élément de palier (ii), la douille interne (iii) présentant, sur sa surface tournée vers l'élément de palier (ii), au moins une protubérance (iv) qui s'étend sur la totalité de sa périphérie perpendiculairement à l'axe longitudinal, **caractérisé en ce que** la douille externe (i), l'élément de palier (ii) et la douille interne creuse (iii) ne sont pas reliés par des agents adhérisants et sont déplaçables l'un par rapport à l'autre et l'élément de palier (ii) est à base de produits de polyaddition de polyisocyanate cellulaires.

2. Palier à section circulaire suivant la revendication 1, **caractérisé en ce que** la douille externe (i) présente un diamètre externe (v) de 52 mm à 56 mm et un diamètre interne (vi) de 48 mm à 52 mm.

3. Palier à section circulaire suivant la revendication 1, **caractérisé en ce que** l'élément de palier (ii) présente un diamètre externe (vi) de 48 mm à 52 mm, un évidement (vii) qui s'étend sur sa surface interne de manière concentrique à son axe longitudinal et présente une profondeur (viii) de 5 mm à 13 mm et une hauteur (ix) de 4 mm à 10 mm pour recevoir la protubérance (iv) de la douille interne creuse (iii) ainsi qu'un diamètre interne (x) de 22 mm à 26 mm.

4. Palier à section circulaire suivant la revendication 1, **caractérisé en ce que** la douille interne creuse (iii) présente un diamètre interne (xi) de 10 mm à 20 mm, un diamètre externe (x) de 22 mm à 26 mm, un diamètre (xii) à la hauteur de la protubérance (iv) de 36 mm à 48 mm, ainsi qu'une hauteur (ix) de la protubérance de 4 mm à 10 mm.

5. Automobiles contenant un palier à section circulaire suivant l'une des revendications 1 à 4.
